# EUROPEAN PATENT SPECIFICATION

(11) **EP 1 528 763 B1**
(45) Date of publication and mention of the grant of the patent: **09.04.2008**
(21) Application number: 04017764.4
(22) Date of filing: 27.07.2004
(51) Int. Cl.: H04M 1/24, H04B 17/00

(54) **Mobile terminal with self performance diagnosis function and method thereof**
Mobilfunkendgerät mit einer Funktion zur Selbstdiagnose der Leistungsfähigkeit und entsprechendes Verfahren
Portable avec une fonction d'auto-diagnose de la performance et procédé correspondant

(30) Priority: 28.10.2003 KR 2003075482
(43) Date of publication of application: 04.05.2005
(73) Proprietor: SAMSUNG ELECTRONICS CO., LTD., Suwon-city, Gyeonggi-do (KR)
(72) Inventor: Kim, Young-Ju, Suwon-si Gyeonggi-do (KR)
(74) Representative: Grünecker, Kinkeldey, Stockmair & Schwanhäusser Anwaltssozietät

(56) References cited:
- WO-A1-02/13427
- US-A- 5 109 535
- US-A- 6 118 982

## Description

The present invention relates generally to a mobile terminal, and in particular, to an apparatus and method for diagnosing hardware performance of a mobile terminal.

A mobile terminal may experience performance degradation as its hardware characteristics deteriorate with the passage of time. In this case, or in the case where the mobile terminal is actually normal but the user thinks that its performance has degraded, he visits a service center to have the mobile terminal diagnosed. The service center diagnoses the performance of the mobile terminal by measuring its hardware characteristics through communication test equipment, a spectrum analyzer, a personal computer (PC), etc. An appropriate measure is taken based on the diagnosis. If the user is mistaken about the normal performance of the mobile terminal, it is understood that the mobile terminal operates well. If performance degradation or break-down actually occurs, the hardware characteristics are adjusted or a damaged part is replaced.

As described above, presently only the service center can diagnose the hardware performance characteristics of the mobile terminal. Therefore, the user must visit the service center if he thinks that the mobile terminal is not working properly. If the performance characteristics of the mobile terminal do not require hardware characteristic adjustment or part exchange, the visit is obviously unnecessary. Also, during diagnosing the mobile terminal in the service center, the user simply must wait and wastes time.

US 6 118 982A refers to a method and an arrangement for automatically monitoring a mobile telephone unit on the occurrence of at least one predetermined event in the mobile telephone unit, for instance a call release. The described mobile telephone unit includes a test object and a testing arrangement. The test object includes a logic device and a transceiver. The logic device includes mainly digital circuits, for instance custom-adapted circuits, so-called ASICS. Furthermore, a choice between establishing or releasing a connection between a transmitter part and a receiver part can be implemented with the aid of a switch. This switch is a conventional switch and may include a frequency converter which, during testing converts a frequency transmitted from the transmitter part to another frequency suitable for the reception in the receiver part. The testing arrangement includes a control circuit, a program generator, a comparison circuit and a test circuit. The control circuit is connected to the program generator, the comparison circuit and the test circuit. The control circuit is also connected to the test object and a trigger device. Furthermore, a test program is started to test the transceiver and to display the results of the performed test on a display.

WS 02/13 427 A1 refers to a method and an arrangement implementing a method for testing a transmitter part and a receiver part in a transceiver. For this signal, the transmitter part is mixed with a mixing signal for generating a signal to be connected to the receiver part. A generated signal is then connected to the receiver part and compared with the transmitter part signal to test the transceiver.

US 5 109 535A describes an apparatus for a transmission-reception simulation test between a transmitter and receiver located in the same station. The described apparatus includes a testing device coupled to the transmitter and the receiver. The testing device contains a first frequency converter for a microwave frequency to microwave frequency conversion for reducing a mixed signal of the output signal of a transmitter having a specific frequency. Furthermore, the testing device includes an attenuator, a low pulse filter and a variable attenuator. The described apparatus is designed in order to ensure a sufficient ratio of the saturated power level of the output signal to the power level of the input signal to reduce the generation of undesirable signal so that the distortion of signals in the apparatus is reduced.

Moreover, the service center must be equipped with the aforementioned measuring equipment to measure the hardware characteristics and diagnose the performance of the mobile terminal. Such measuring equipment is usually expensive.

It is the object of the present invention is to substantially solve at least the above problems and/or disadvantages and to provide at least the advantages below. Accordingly, an object of the present invention is to provide a mobile terminal that allows a user to easily diagnose its hardware performance characteristics, and a diagnosing method thereof.

This object is solved by the subject matter of the independent claims.

Preferred embodiments are defined in the dependent claims.

An aspect of the present invention is to provide a mobile terminal of which the hardware performance characteristics can be diagnosed without using measuring equipment, and a diagnosing method thereof.

The above object and aspect are achieved by providing a mobile terminal with a self performance diagnosis function and a method thereof as set out in independent claims 1 and 8, preferred forms being set out in dependent claims.

The above features and advantages of the present invention will become more apparent from the following detailed description when taken in conjunction with the accompanying drawings in which:
FIG. 1 is a block diagram of a mobile terminal according to an embodiment of the present invention; and
FIG. 2 is a flowchart illustrating a mobile terminal self-diagnosing method according to the embodiment of the present invention.

A preferred embodiment of the present invention will be described herein below with reference to the accompanying drawings. In the following description, well-known functions or constructions are not described in detail to avoid obscuring the invention in unnecessary detail.

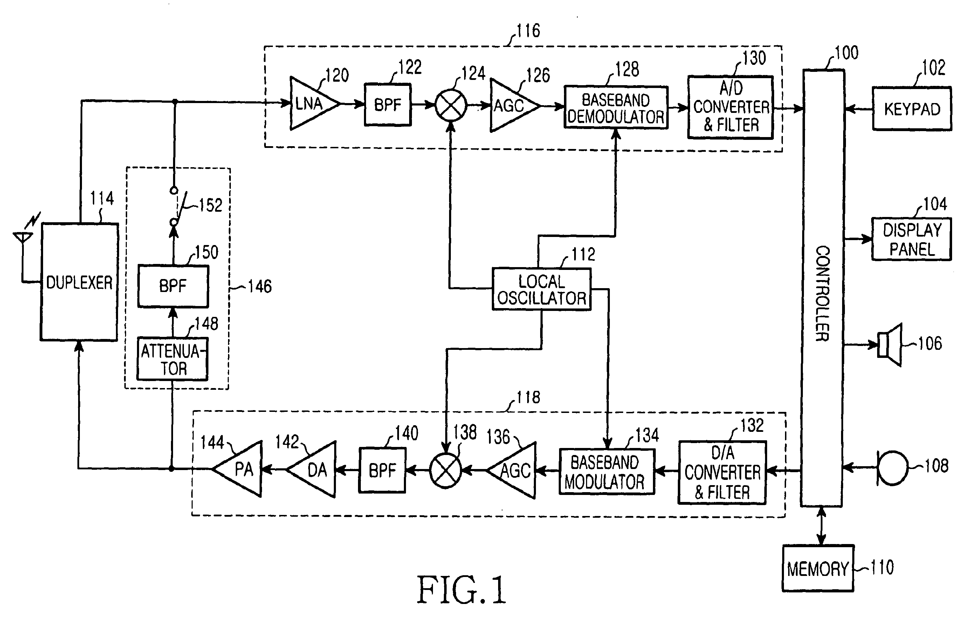

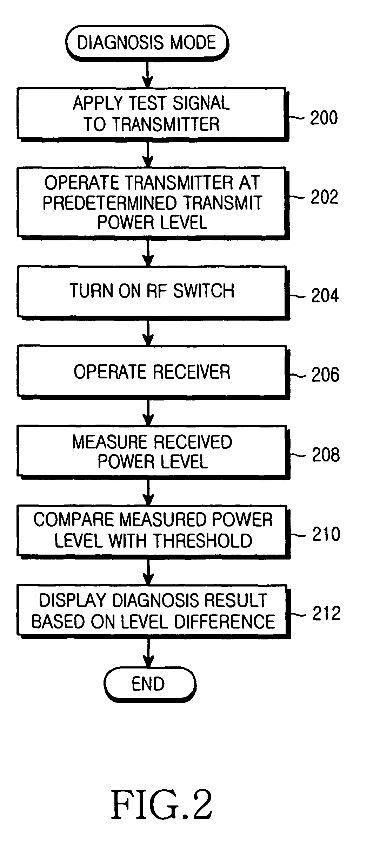

FIG. 1 is a block diagram of a mobile terminal according to an embodiment of the present invention. Referring to FIG. 1, the mobile terminal is configured so that a transmission/reception path connector 146 is additionally connected between a transmitter 118 and a receiver 116 common to mobile terminals, and a controller 100 performs a diagnosis procedure as illustrated in FIG. 2 according to the present invention. The transmitter 118 generates an RF signal corresponding to a transmission baseband signal received from the controller 100 and transmits the RF signal to an antenna through a duplexer 114. An RF signal received through the antenna is applied to the input of the receiver 116 through the duplexer 114. The receiver 116 generates a baseband signal corresponding to the RF signal and outputs it to the controller 100. The controller 100 is responsible for processing and controlling the functions of the mobile terminal, inclusive of voice call and data communication. In addition to the typical control function, the controller 100 further performs a self performance diagnosis function according to the present invention. The controller 100 is, for example, an MSM (Mobile Station Modem) of QUALCOMM. A keypad 102, having digit keys and function keys, provides key input data corresponding to a user-pressed key to the controller 100. A display panel 104 displays visual information under the control of the controller 100. A speaker 106 and a microphone 108 are connected to a CODEC (Coder-Decoder) inside the controller 100, for use in voice calls and voice recording. A memory 110 includes a ROM (Read Only Memory) for storing the microcodes of a process and control program for the controller 100 and reference data, a RAM (Random Access Memory) serving as a working memory for the controller 100, and a flash RAM for storing updatable data for preservation.

The receiver 116 and the transmitter 118 are schematically illustrated to help in understanding of the present invention. A local oscillator 112 is commonly related to the receiver 116 and the transmitter 118 and thus it is separately shown. In operation, the duplexer 114 separates an RF signal at a reception frequency from an RF signal received through the antenna. In the receiver 116, the RF signal is amplified in an LNA (Low Noise Amplifier) 120 and applied to the input of a mixer 124 through a BPF (Band Pass Filter) 122. The mixer 124 downconverts the RF signal received from the BPF 122 to an IF (Intermediate Frequency) signal by mixing the RF signal with an oscillation frequency received from the local oscillator 112. An AGC (Automatic Gain Controller) 126 controls the gain of the IF signal and a baseband demodulator 128 converts the IF signal to a baseband signal using an oscillation frequency received from the local oscillator. An A/D (Analog-to-Digital) converter and filter 130 digitizes the baseband signal and transmits it to the controller 100.

Meanwhile, in the transmitter 118, a D/A (Digital-to-Analog) converter and filter 132 converts a digital baseband transmission signal received from the controller 100 to an analog baseband signal. A baseband modulator 134 converts the analog baseband signal to an IF signal using an oscillation frequency recived from the local oscillator and an AGC 136 controls the gain of the IF signal. A mixer 138 upconverts the IF signal received from the AGC 136 to an RF signal by mixing the IF signal with an oscillation frequency received from the local oscillator 112. A DA (Drive Amplifier) 142 amplifies the RF signal received through a BPF 140 and a PA (Power Amplifier) 144 amplifies the power of the amplified RF signal. The output of the PA 144 is transmitted to the antenna through the duplexer 114.

To diagnose the performance of hardware including the local oscillator 112, the transmitter 118 and the receiver 116 in the above-constituted mobile terminal, the transmission/reception path connector 146 with an attenuator 148, a BPF 150 and an RF switch 152 is interposed between the output end of the transmitter 118 and the input end of the receiver 116. The RF switch 152 switches on or off under the control of the controller 100. Only in a diagnosis mode, the RF switch 152 is turned on by the controller 100. With the RF switch 152 switched on, the RF signal output from the PA 144 of the transmitter 118 is applied to the input of the LNA 120 in the receiver 116 through the attenuator 148, the BPF 150 and the RF switch 152.

The diagnosis mode is set to enable the mobile terminal to autonomously diagnose its hardware performance according to the present invention. A user or a repairman can select the diagnosis mode through a menu or by a predetermined key input. If the user selects the diagnosis mode through the keypad 102, the controller 100 diagnoses the hardware performance of the mobile terminal on its own in steps 200 through 212 illustrated in FIG. 2 and displays the diagnosis result on the display panel 104.

Referring to FIG. 2, the controller 100 generates a test signal and transmits it to the transmitter 118 in step 200 and operates the transmitter 118 by setting transmit power to a predetermined level in step 202. The test signal is a digital signal in an arbitrary pattern by which to generate an RF signal in the transmitter 118, for diagnosis. Upon receipt of the test signal, the transmitter 118 generates the RF signal corresponding to the test signal. The PA 144 amplifies the RF signal to the predetermined transmit power level.

Meanwhile, the controller 100 switches on the RF switch 152 in step 204 and operates the receiver 116 in step 206. Thus, the RF signal output from the transmitter 118 is attenuated in the attenuator 148 and applied to the input of the receiver 116 through the BPF 150 and the RF switch 152. Here, the RF signal output from the transmitter 118 is at a higher power level than an RF signal received through the antenna. Application of the RF signal from the transmitter to the receiver 116 without any particular processing may impose a constraint on the receiver 116 or damage it because the receiver 116 is designed to receive a weak RF signal through the antenna and process it. That's why the attenuator 148 attenuates the RF signal from the transmitter 118 to an appropriate level for processing in the receiver. The BPF 150 passes the attenuated RF signal only in the reception frequency band.

In step 208, the controller 100 measures the received power of a baseband signal received from the receiver 116 in the same manner as typical receiver power level measuring. The controller 100 compares the receiver power measurement with a predetermined threshold in step 210 and displays a diagnosis result based on the difference between the received power measurement and the threshold on the display panel 104 in step 212.

Since the RF signal from the transmitter 118 includes noise, and this noise may negatively affect an RF signal received through the antenna, it is minimized through attenuation in the duplexer 114. However, the noise-including RF signal is applied to the receiver 116 and the level of the baseband signal from the receiver 116 corresponding to the RF signal is measured, to thereby diagnose the hardware performance in the present invention. As the hardware performance characteristics degrade, the noise increases in the transmitter 118 and the receiver 116. Thus, the hardware performance can be diagnosed by measuring the power level of the baseband signal corresponding to the noise-including RF signal at the output end of the receiver 116. Since the noise of the RF signal from the PA 144 increases with transmit power, it is preferable to set the transmit power to a maximum level in step 202 in order to diagnose the hardware performance under the worst condition. When the level of the baseband signal, which the receiver 116 outputs for the input of the RF signal corresponding to the test from the transmitter 118, is measured, the RF signal received through the antenna may be input to the receiver 116 through the duplexer 114, affecting the power level measuring. In consideration of this case, the frequency of the RF signal generated from the transmitter 118 in correspondence with the test signal and processed in the receiver 116 is preferably set to a frequency unused for actual mobile communication services. Alternatively, the RF signal from the duplexer 114 is blocked from the receiver 116 during operation in the diagnosis mode.

A comparative criterion is needed to diagnose the hardware performance from the measured received power level. For each mobile terminal model, a power level at which the hardware performance is considered good can be theoretically calculated or empirically obtained as the diagnosis criterion. However, considering that there are differences in hardware characteristics even between mobile terminals of the same model, it is preferred that a mobile terminal manufacturer performs the diagnosis mode operation in the process of fabrication, for example before delivery, and stores a receiver power level measured in steps 200 through 208 as a threshold in the memory 110 for use by the controller 100.

The diagnosis result displayed on the display panel 104 in step 212 can be diverse. For example, the difference between a received power level and a threshold is displayed so that the user or repairman can decide the degree of hardware performance degradation or whether the mobile terminal is seriously damaged. However, it is difficult for ordinary users to decide from the displayed difference value whether to visit a service center to get their mobile terminals fixed. Therefore, it is preferable to explicitly explain the meanings of level differences with regard to hardware performance in a user guide manual. Alternatively, a message indicating whether the hardware performance is good can be displayed on the display panel 104. That is, the controller 100 compares the level difference with a predetermined threshold and if it is greater than the threshold, the controller 100 displays a message indicating bad hardware performance as a diagnosis result. If the level difference is equal to or less than the threshold, the controller 100 displays a message indicating good hardware performance as the diagnosis result.

As described above, the present invention allows a mobile terminal to self-diagnose its hardware performance without the need of measuring equipment, and to display the diagnosis result. Therefore, a user or a repairman can easily decide the hardware performance characteristics of the mobile terminal.

As a result, the user does not need to visit a service center unnecessarily. Also, the service center diagnoses the performances of mobile terminals without the need of purchasing the measuring equipment. Hence, unnecessary part exchanges can be prevented.

While the invention has been shown and described with reference to a certain preferred embodiment thereof, it is a mere exemplary application. Although the transmission/reception path connector 146 is provided in a mobile terminal in the description, it can be fabricated in a detachable jig to be used in a service center, considering a cost increase involved in the installation of the transmission/reception path connector 146 in the mobile terminal. Then, the RF switch 152 in the jig is manipulated by a repairman in the service center. In this case, even though the user still has to visit the service center for diagnosis of the mobile terminal performance, the service center advantageously can diagnose the mobile terminal performance without using any particular measuring equipment. In addition, while the transmission/reception path connector 146 includes the attenuator 148 and the BPF 150 as well as the RF switch 152, they can be omitted or selectively used in real implementation. That is, setting the transmit power level based on an RF signal level suitable for input to the receiver 116 in step 202 will obviate the need of using the attenuator 148. The BPF 150 can also be omitted due to the presence of the BPF 122 in the receiver 116. Therefore, it will be understood by those skilled in the art that various changes in form and details may be made therein without departing from the scope of the invention as defined by the appended claims.

## Claims

1. A self-diagnosis apparatus for diagnosing the performance of a mobile terminal having a transmitter (118) for generating an RF signal in correspondence with a baseband transmission signal and a receiver (116) for generating a baseband signal in correspondence with a received RF signal, comprising:
an RF switch (152) connected between an output end of the transmitter and an input end of the receiver, for switching on in a diagnosis mode and transmitting an RF signal received from the transmitter to the receiver; and
a controller (100) adapted to generate a test signal in the diagnosis mode, to apply the test signal to the transmitter, to operate the transmitter by setting transmit power to a predetermined level, to switch the RF switch on, to operate the receiver, to measure the received power level of a baseband signal received from the receiver, to compare the measured power level with a predetermined threshold, and to display a diagnosis result based on the level difference between the measured power level and the threshold on a display (104),
wherein the controller is adapted to store a received power level measured in the diagnosis mode set during a fabrication process of the mobile terminal as the threshold in a memory.

2. The self-diagnosis apparatus of Claim 1, wherein the RF switch is detachably installed in the mobile terminal.

3. The self-diagnosis apparatus of one of Claims 1 or 2, further comprising an attenuator (148) and a BPF (150) between the receiver and the RF switch.

4. The self-diagnosis apparatus of Claim 3, wherein the RF switch, the attenuator and the BPF filter are detachably installed.

5. The self-diagnosis apparatus of one of Claims 1 to 4, wherein the controller is adapted to display the level difference as the diagnosis result.

6. The self-diagnosis apparatus of one of Claims 1 to 5, wherein the controller is adapted to display a message indicating bad hardware performance as the diagnosis result if the level difference is greater than a predetermined threshold, and a message indicating good hardware performance as the diagnosis result if the level difference is equal to or less than the predetermined threshold.

7. The self-diagnosis apparatus of one of Claims 1 to 6, wherein the predetermined transmit power level is a maximum transmit power level.

8. A self-diagnosis method for diagnosing the performance of a mobile terminal having a transmitter for generating an RF signal in correspondence with a baseband transmission signal, a receiver for generating a baseband signal in correspondence with a received RF signal, and an RF switch connected between an output end of the transmitter and an input end of the receiver, comprising the steps of:
storing a received power level measured in a diagnosis mode set during a fabrication process of the mobile terminal as a predetermined threshold in a memory;
generating a test signal in the diagnosis mode, applying the test signal to the transmitter, and operating the transmitter by setting transmit power to the predetermined level;
switching the RF switch on and operating the receiver;
measuring the received power level of a baseband signal received from the receiver and comparing the measured power level with a predetermined threshold; and
displaying a diagnosis result based on the level difference between the measured power level and the threshold on a display.

9. The self-diagnosis method of Claim 8, wherein the display step comprises the step of displaying the level difference as the diagnosis result.

10. The self-diagnosis method of one of Claims 8 or 9, wherein the display step comprises the steps of:
displaying a message indicating bad hardware performance as the diagnosis result if the level difference is greater than a predetermined threshold; and
displaying a message indicating good hardware performance as the diagnosis result if the level difference is equal to or less than the predetermined threshold.

11. The self-diagnosis method of one of Claims 8 to 10, wherein the predetermined transmit power level is a maximum transmit power level.

## Patentansprüche

1. Selbstdiagnosevorrichtung zum Diagnostizieren der Leistung eines Mobil-Endgerätes mit einer Sendeeinrichtung (118) zum Erzeugen eines RF-Signals entsprechend einem Basisband-Sendesignal und einer Empfangseinrichtung (116) zum Erzeugen eines Basisband-Signals entsprechend einem empfangenen RF-Signal, wobei sie umfasst:
eine RF-Schalteinrichtung (152), die zwischen ein Ausgangsende der Sendeeinrichtung und ein Eingangsende der Empfangseinrichtung geschaltet ist, um in einem Diagnosemodus anzuschalten und ein von der Sendeeinrichtung empfangenes RF-Signal zu der Empfangseinrichtung zu senden; und
eine Steuereinheit (100), die so eingerichtet ist, dass sie in dem Diagnosemodus ein Testsignal erzeugt, das Test-Signal an die Sendeeinrichtung anlegt, die Sendeeinrichtung betreibt, indem sie Sendeleistung auf einen vorgegebenen Pegel einstellt, die RF-Schalteinrichtung anschaltet, die Empfangseinrichtung betreibt, den Pegel der Empfangsleistung eines von der Empfangseinrichtung empfangenen Basisband-Signals misst, den gemessenen Leistungspegel mit einem vorgegebenen Schwellenwert vergleicht und eine Diagnoseergebnis auf Basis der Pegeldifferenz zwischen dem gemessenen Leistungspegel und dem Schwellenwert auf einer Anzeigeeinrichtung (104) anzeigt,
wobei die Steuereinheit so eingerichtet ist, dass sie einen Empfangsleistungspegel, der in dem Diagnosemodus gemessen wird, der während eines Herstellungsprozesses im Mobil-Endgerät eingestellt wird, als den Schwellenwert in einem Speicher speichert.

2. Selbstdiagnosevorrichtung nach Anspruch 1, wobei die RF-Schalteinrichtung herausnehmbar in dem Mobil-Endgerät installiert ist.

3. Selbstdiagnosevorrichtung nach einem der Ansprüche 1 oder 2, die des Weiteren eine Dämpfeinrichtung (148) und ein Bandpassfilter (150) zwischen der Empfangseinrichtung und der RF-Schalteinrichtung umfasst.

4. Selbstdiagnosevorrichtung nach Anspruch 3, wobei die RF-Schalteinrichtung, die Dämpfeinrichtung und das Bandpassfilter herausnehmbar installiert sind.

5. Selbstdiagnosevorrichtung an einem der Ansprüche 1 bis 4, wobei die Steuereinheit so eingerichtet ist, dass sie die Pegeldifferenz als das Diagnoseergebnis anzeigt.

6. Selbstdiagnosevorrichtung nach einem der Ansprüche 1 bis 5, wobei die Steuereinheit so eingerichtet ist, dass sie eine Nachricht, die mangelhafte Hardware-Leistung angibt, als das Diagnoseergebnis anzeigt, wenn die Pegeldifferenz über einem vorgegebenen Schwellenwert liegt, und eine Nachricht, die gute Hardware-Leistung angibt, als das Diagnoseergebnis anzeigt, wenn die Pegeldifferenz auf oder unter dem vorgegebenen Schwellenwert liegt.

7. Selbstdiagnosevorrichtung nach einem der Ansprüche 1 bis 6, wobei der vorgegebene Sendeleistungspegel ein maximaler Sendeleistungspegel ist.

8. Selbstdiagnoseverfahren zum Diagnostizieren der Leistung eines Mobil-Endgerätes mit einer Sendeeinrichtung zum Erzeugen eines RF-Signals entsprechend einem Basisband-Sendesignal, einer Empfangseinrichtung zum Erzeugen eines Basisband-Signals entsprechend einem empfangenen RF-Signal und einer RF-Schalteinrichtung, die zwischen ein Ausgangsende der Sendeeinrichtung und ein Eingangsende der Empfangseinrichtung geschaltet ist, wobei es die folgenden Schritte umfasst:
Speichern eines Empfangsleistungspegels, der in einem Diagnosemodus gemessen wird, der während eines Herstellungsprozesses des Mobil-Endgerätes eingestellt wird, als einen vorgegebenen Schwellenwert in einem Speicher;
Erzeugen eines Testsignals in dem Diagnosemodus, Anlegen des Testsignals an die Sendeeinrichtung und Betreiben der Sendeeinrichtung, indem Sendeleistung auf den vorgegebenen Pegel eingestellt wird;
Anschalten der RF-Schalteinrichtung und Betreiben der Empfangseinrichtung;
Messen des Empfangleistungspegels eines von der Empfangseinrichtung empfangenen Basisband-Signals und Vergleichen des gemessenen Leistungspegels mit einem vorgegebenen Schwellenwert; und
Anzeigen eines Diagnoseergebnisses auf Basis der Pegeldifferenz zwischen dem gemessenen Leistungspegel und dem Schwellenwert auf einer Anzeigeeinrichtung.

9. Selbstdiagnoseverfahren nach Anspruch 8, wobei der Anzeigeschritt den Schritt des Anzeigens der Pegeldifferenz als das Diagnoseergebnis umfasst.

10. Selbstdiagnoseverfahren nach einem der Ansprüche 8 oder 9, wobei der Anzeigeschritt die folgenden Schritte umfasst:
Anzeigen einer Nachricht, die mangelhafte Hardware-Leistung angibt, als das Diagnoseergebnis, wenn die Pegeldifferenz über einem vorgegebenen Schwellenwert liegt; und
Anzeigen einer Nachricht, die gute Hardware-Leistung angibt, als das Diagnoseergebnis, wenn die Pegeldifferenz auf oder unter dem vorgegebenen Schwellenwert liegt.

11. Selbstdiagnoseverfahren nach einem der Ansprüche 8 bis 10, wobei der vorgegebene Sendeleistungspegel ein maximaler Sendeleistungspegel ist.

## Revendications

1. Appareil d'autodiagnostic, destiné à diagnostiquer le fonctionnement d'un terminal mobile possédant un émetteur (118) destiné à produire un signal RF correspondant à un signal d'émission en bande de base et un récepteur (116) destiné à produire un signal en bande de base correspondant à un signal RF reçu, comprenant :
un commutateur RF (152) connecté entre une extrémité de sortie de l'émetteur et une extrémité d'entrée du récepteur, destiné à être fermé en mode de diagnostic et à transmettre au récepteur un signal RF reçu de l'émetteur ; et
un contrôleur (100) conçu pour produire un signal d'essai dans le mode de diagnostic, pour appliquer le signal d'essai à l'émetteur, pour faire fonctionner l'émetteur en réglant la puissance d'émission à un niveau prédéterminé, pour fermer le commutateur RF, pour faire fonctionner le récepteur, pour mesurer le niveau de puissance reçu d'un signal en bande de base reçu du récepteur, pour comparer le niveau de puissance mesuré à un seuil prédéterminé et pour afficher sur un écran d'affichage (104) un résultat du diagnostic sur la base de la différence de niveau entre le niveau de puissance mesuré et le seuil,
dans lequel le contrôleur est conçu pour stocker en mémoire comme seuil un niveau de puissance reçu mesuré dans le mode de diagnostic établi pendant le processus de fabrication du terminal mobile.

2. Appareil d'autodiagnostic selon la revendication 1, dans lequel le commutateur RF est installé de manière amovible dans le terminal mobile.

3. Appareil d'autodiagnostic selon l'une des revendications 1 et 2, comprenant en outre un atténuateur (148) et un filtre passe-bande (150) entre le récepteur et le commutateur RF.

4. Appareil d'autodiagnostic selon la revendication 3, dans lequel le commutateur RF, l'atténuateur et le filtre passe-bande sont installés de manière amovible.

5. Appareil d'autodiagnostic selon l'une des revendications 1 à 4, dans lequel le contrôleur est conçu pour afficher comme résultat du diagnostic la différence de niveau.

6. Appareil d'autodiagnostic selon l'une des revendications 1 à 5, dans lequel le contrôleur est conçu pour afficher un message indiquant un mauvais fonctionnement du matériel comme résultat du diagnostic si la différence de niveau est supérieure à un seuil prédéterminé et un message indiquant un bon fonctionnement du matériel comme résultat du diagnostic si la différence de niveau est égale ou inférieure au seuil prédéterminé.

7. Appareil d'autodiagnostic selon l'une des revendications 1 à 6, dans lequel le niveau de puissance d'émission prédéterminé est un niveau de puissance d'émission maximal.

8. Procédé d'autodiagnostic, destiné à diagnostiquer le fonctionnement d'un terminal mobile possédant un émetteur destiné à produire un signal RF correspondant à un signal d'émission en bande de base, un récepteur destiné à produire un signal en bande de base correspondant à un signal RF reçu et un commutateur RF connecté entre une extrémité de sortie de l'émetteur et une extrémité d'entrée du récepteur, comprenant les étapes consistant à :
stocker dans une mémoire en tant que seuil prédéterminé un niveau de puissance reçu dans un mode de diagnostic établi pendant un processus de fabrication du terminal mobile ;
produire un signal d'essai dans le mode de diagnostic, appliquer le signal d'essai à l'émetteur et faire fonctionner l'émetteur en réglant la puissance d'émission au niveau prédéterminé ;
fermer le commutateur RF et faire fonctionner le récepteur ;
mesurer le niveau de puissance reçu d'un signal en bande de base reçu du récepteur et comparer le niveau de puissance mesuré à un seuil prédéterminé ; et
afficher sur un écran d'affichage un résultat de diagnostic sur la base de la différence de niveau entre le niveau de puissance mesuré et le seuil.

9. Procédé d'autodiagnostic selon la revendication 8, dans lequel l'étape d'affichage comprend l'étape consistant à afficher comme résultat du diagnostic la différence de niveau.

10. Procédé d'autodiagnostic selon l'une des revendications 8 et 9, dans lequel l'étape d'affichage comprend les étapes consistant à :
afficher un message indiquant un mauvais fonctionnement du matériel comme résultat du diagnostic si la différence de niveau est supérieure à un seuil prédéterminé ; et
afficher un message indiquant un bon fonctionnement du matériel comme résultat du diagnostic si la différence de niveau est égale ou inférieure au seuil prédéterminé.

11. Procédé d'autodiagnostic selon l'une des revendications 8 à 10, dans lequel le niveau de puissance d'émission prédéterminé est un niveau de puissance d'émission maximal.
